(19) Europäisches Patentamt
European Patent Office
Office européen des brevets

(11) EP 3 339 917 A1

(12) EUROPEAN PATENT APPLICATION
published in accordance with Art. 153(4) EPC

(43) Date of publication:
**27.06.2018 Bulletin 2018/26**

(21) Application number: **16836987.4**

(22) Date of filing: **03.08.2016**

(51) Int Cl.:
***G02B 3/08*** *(2006.01)* ***B29C 39/24*** *(2006.01)*
***C08G 59/24*** *(2006.01)* ***C08G 59/68*** *(2006.01)*
***C08G 65/18*** *(2006.01)* ***G02B 1/04*** *(2006.01)*
***G02B 1/10*** *(2015.01)*

(86) International application number:
**PCT/JP2016/072817**

(87) International publication number:
**WO 2017/029996 (23.02.2017 Gazette 2017/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.08.2015 JP 2015162635**

(71) Applicant: **Daicel Corporation**
**Osaka-shi, Osaka 530-0011 (JP)**

(72) Inventors:
- **FUJIKAWA, Takeshi**
**Himeji-shi**
**Hyogo 671-1283 (JP)**
- **FUKUI, Sadayuki**
**Himeji-shi**
**Hyogo 671-1283 (JP)**

(74) Representative: **Grünecker Patent- und Rechtsanwälte**
**PartG mbB**
**Leopoldstraße 4**
**80802 München (DE)**

# (54) OPTICAL COMPONENT AND OPTICAL DEVICE EQUIPPED WITH SAME

(57) Provided is a fine and highly heat-resistant optical component having a coating layer on part thereof. The optical component according to the present invention includes a cured product of a curable composition of an epoxy compound (A); and at least one coating layer having a thickness of 0.1 mm or less on part of the cured product. The optical component has a maximum thickness of 2 mm or less and a maximum width in a plan view of 10 mm or less. This optical component is produced through the steps 1, 2, and 3 as follows. In the step 1, the curable composition is charged into a mold having two or more optical-component concave patterns, and at least one of light and heat is applied to give a cured product having two or more optical-component forms. In the step 2, the cured product is separated to give separated articles. In the step 3, a coating layer or layers is formed on the separated articles.

EP 3 339 917 A1

## Description

Technical Field

The present invention relates to an optical component including a coating layer, and to an optical device equipped with the optical component. This application claims priority to Japanese Patent Application No. 2015-162635, filed to Japan on August 20, 2015, the entire contents of which are incorporated herein by reference.

Background Art

Cameras mounted on smartphones and other portable electronic devices are equipped with flash lenses disposed immediately in front of a light source, so as to diffuse light from the light source. Fresnel lenses, which are ready for low-profile, small products, are mainly used as the flash lenses.

The lenses may be required to have a black or white portion in the periphery thereof, so as to have light-shielding ability or reflectivity. In known techniques, this configuration is archived by painting (coating) the lenses to form a black or white coating; or forming the lenses by coinjection molding (two-color molding).

Exemplary known methods for producing lenses include methods of subjecting a thermoplastic resin to injection molding, where the thermoplastic resin is exemplified typically by polycarbonates, poly(methyl methacrylate)s, and cycloolefin polymers (Patent Literature (PTL) 1 and PTL 2). The techniques using injection molding, however, hardly produce such fine lenses for use in cameras mounted on smartphones and other portable electronic devices. Also disadvantageously, it is very difficult to coat fine lenses obtained by injection molding one by one, and this causes increase in cost. The technique of forming a lens by coinjection molding requires expensive equipment and hardly enables inexpensive mass production of such lenses. In addition, the lenses made from thermoplastic resins are inferior in heat resistance and are incapable of being subjected to board-level mounting by reflow soldering (in particular, reflow soldering using lead-free solder) collectively with other components.

Citation List

Patent Literature

PTL 1: Japanese Unexamined Patent Application Publication (JP-A) No. 2013-212593
PTL 2: JP-A No. 2013-224349

Summary of Invention

Technical Problem

Accordingly, the present invention has an object to provide an optical component which is fine and has excellent heat resistance, and which includes a coating layer on part thereof.

The present invention has another object to provide a method for simply and efficiently producing the optical component.

The present invention has yet another object to provide an optical device equipped with the optical component.

Solution to Problem

As a result of intensive investigations to achieve the objects, the inventors of the present invention have found that a curable composition containing an epoxy compound has low viscosity and offers excellent transferability; that a cured product of the curable composition has excellent heat resistance; and that a fine optical component having a coating layer can be produced simply and efficiently by subjecting the curable composition to cast molding using a mold having two or more optical-component concave patterns, whereby forming a cured product having two or more optical-component forms, cutting the cured product to give separated articles, and coating the surfaces of the separated articles. The present invention has been made on the basis of these findings.

Specifically, the present invention provides, in one aspect, an optical component including a cured product of a curable composition, and at least one coating layer disposed on part of the cured product. The curable composition contains an epoxy compound (A). The coating layer has a thickness of 0.1 mm or less. The optical component has a maximum thickness of 2 mm or less and a maximum width in a plan view of 10 mm or less.

In the optical component, the epoxy compound (A) may include a compound represented by Formula (a):

[Chem. 1]

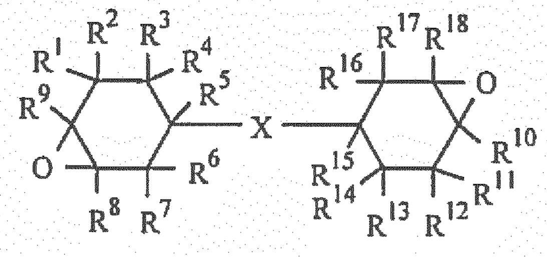

(a)

wherein $R^1$ to $R^{18}$ are each, identically or differently, selected from hydrogen, halogen, a hydrocarbon group optionally containing oxygen or halogen, and optionally substituted alkoxy; and X is selected from a single bond and a linkage group.

In the optical component, the curable composition may contain (A) the epoxy compound, (B) an oxetane compound, and (C) a cationic initiator.

The optical component may have a decomposition temperature of 200°C or higher.

The optical component may be a Fresnel lens.

The present invention provides, in another aspect, a method for producing the optical component. The method includes the following steps 1 to 3.

In the step 1, a curable composition containing an epoxy compound (A) is charged into a mold having two or more optical-component concave patterns, and thereafter at least one of light and heat is applied to give a cured product having two or more optical-component forms.

In the step 2, the cured product is separated into separated articles.

In the step 3, a coating layer or layers are formed on the separated articles.

In the method for producing the optical component, the light may be applied using a UV-LED (wavelength: 350 to 450 nm).

The present invention provides, in yet another aspect, an optical device including the optical component.

In addition and advantageously, the present invention provides a method for producing an optical device. The method includes preparing an optical component by the optical component production method, and subjecting the prepared optical component to board-level mounting by reflow soldering.

Specifically, the present invention relates to the following:

(1) An optical component including: a cured product of a curable composition containing (A) an epoxy compound; and at least one coating layer disposed on part of the cured product, the coating layer having a thickness of 0.1 mm or less, the optical component having a maximum thickness of 2 mm or less and a maximum width in a plan view of 10 mm or less.

(2) The optical component according to (1), wherein the epoxy compound (A) includes a cycloaliphatic epoxy compound.

(3) The optical component according to (1), wherein the epoxy compound (A) includes a cycloaliphatic epoxy compound and a glycidyl ether epoxy compound (in particular, at least one of an aromatic glycidyl ether epoxy compound and an alicyclic glycidyl ether epoxy compound).

(4) The optical component according to one of (2) and (3), wherein the cycloaliphatic epoxy compound is a compound represented by Formula (a).

(5) The optical component according to one of (2) and (3), wherein the cycloaliphatic epoxy compound is at least one compound selected from the group consisting of 3,4-epoxycyclohexylmethyl (3,4-epoxy)cyclohexanecarboxylate, (3,4,3',4'-diepoxy)bicyclohexyl, bis(3,4-epoxycyclohexylmethyl) ether, 1,2-epoxy-1,2-bis(3,4-epoxycyclohex-1-yl)ethane, 2,2-bis(3,4-epoxycyclohex-1-yl)propane, and 1,2-bis(3,4-epoxycyclohex-1-yl)ethane.

(6) The optical component according to any one of (1) to (5), wherein the curable composition contains the epoxy compound (A) in a content of 30 to 90 weight percent of the totality of all curable compounds contained in the curable composition.

(7) The optical component according to any one of (2) to (6), wherein the curable composition contains the cycloaliphatic epoxy compound in a content of 30 to 80 weight percent of the totality of all curable compounds contained in the curable composition.

(8) The optical component according to any one of (1) to (7), wherein the curable composition contains (A) the epoxy compound, (B) an oxetane compound, and (C) a cationic initiator.

(9) The optical component according to (8), wherein the oxetane compound (B) is a compound represented by Formula (b) (particularly preferably, at least one compound selected from compounds represented by Formulae (b-1) to (b-15)).

(10) The optical component according to one of (8) and (9), wherein the curable composition contains the oxetane compound (B) in a content of 5 to 40 weight percent of the totality of all curable compounds contained in the curable composition.

(11) The optical component according to any one of (8) to (10), wherein the curable composition has a content of a curable compound excluding the epoxy compound (A) and the oxetane compound (B) of 5 weight percent or less of the totality of all curable compounds contained in the curable composition.

(12) The optical component according to any one of (1) to (11), wherein the curable composition contains at least one surface modifier selected from silicone surfactants, acrylic surfactants, and fluorochemical surfactants in a proportion of 0.01 to 3 parts by weight per 100 parts by weight of all curable compounds contained in the curable composition.

(13) The optical component according to any one of (1) to (12), which has a decomposition temperature of 200°C or higher.

(14) The optical component according to any one of (1) to (13), which is a Fresnel lens.

(15) The optical component according to any one of (1) to (14), wherein the coating layer has a transmittance of 5% or less.

(16) The optical component according to any one of (1) to (15), wherein the coating layer has a reflectance of 60% or more.

(17) A method for producing an optical component to give the optical component according to any one of (1) to (16), the method including the steps of:

1) charging a curable composition containing (A) an epoxy compound into a mold having two or more optical-component concave patterns and thereafter applying at least one of light and heat to give a cured product having two or more optical-component forms;
2) separating the cured product into separated articles; and
3) forming a coating layer or layers on the separated articles.

(18) The method according to (17) for producing an optical component, wherein the light is applied using a UV-LED (wavelength: 350 to 450 nm).

(19) The method according to one of (17) and (18) for producing an optical component, wherein the curable composition containing the epoxy compound (A) has a viscosity of 100 to 500 mPa·s at 25°C and a shear rate of 20 $s^{-1}$.

(20) An optical device including the optical component according to any one of (1) to (16).

(21) A method for producing an optical device, the method including a) preparing an optical component by the method according to any one of (17) to (19) for producing an optical component; and b) subjecting the prepared optical component to board-level mounting by reflow soldering. Advantageous Effects of Invention

The optical component according to the present invention includes a cured product of a curable composition containing an epoxy compound (A). The optical component therefore has excellent heat resistance, can be subjected to board-level mounting by reflow soldering (in particular, soldering with lead-free solder) collectively with other components, and enables production of an optical device equipped with the optical component with excellent working efficiency. The optical component includes a coating layer and thereby has excellent light-shielding ability or reflectivity.

The production method according to the present invention can produce the optical component simply and efficiently. The production method according to the present invention uses the curable composition containing an epoxy compound (A) and having excellent transferability, and can thereby accurately produce even an optical component having a fine structure (such as a Fresnel lens, in particular, a flash Fresnel lens for use in a camera mounted on smartphones and other portable electronic devices).

Brief Description of Drawings

FIG. 1 illustrates a cross-sectional view (a-1) and a plan view (a-2) (observed from right above), respectively, of an exemplary Fresnel lens;

FIG. 2 schematically illustrates a method according to an embodiment of the present invention for producing an optical component;

FIG. 3 is a schematic view of a cured product prepared in a compounding example;

FIG. 4 schematically illustrates a plan view (4-1) and a perspective view (4-2), respectively, of a separated article derived from a cured product prepared in examples (working examples);

FIG. 5 schematically illustrates a perspective view (5-1) and a cross-sectional view (5-2), respectively, of a device prepared for the evaluation of light-shielding ability of a separated article each derived from cured products obtained in the examples; and

FIG. 6 is a graph (schematic illustration of the results of thermogravimetry) illustrating how to evaluate heat resistance of a cured product.

## Description of Embodiments

### Curable Composition

### Epoxy Compound (A)

The curable composition for use in the present invention contains an epoxy compound as a curable compound (in particular, as a cationically curable compound).

Non-limiting examples of the epoxy compound include aromatic glycidyl ether epoxy compounds such as bisphenol-A diglycidyl ethers and bisphenol-F diglycidyl ethers; alicyclic glycidyl ether epoxy compounds such as hydrogenated bisphenol-A diglycidyl ethers and hydrogenated bisphenol-F diglycidyl ethers; aliphatic glycidyl ether epoxy compounds; glycidyl ester epoxy compounds; glycidylamine epoxy compounds; cycloaliphatic epoxy compounds; and epoxy-modified siloxane compounds. The curable composition may contain each of different epoxy compounds alone or in combination.

The curable composition for use in the present invention preferably contains, among them, a cycloaliphatic epoxy compound so as to give a cured product that has excellent mechanical strengths. As used herein, the term "cycloaliphatic epoxy compound" refers to a compound containing an alicycle, and a cycloaliphatic epoxy group (such as a cyclohexene oxide group), where the cycloaliphatic epoxy group contains an oxygen atom bonded in a triangular arrangement to two adjacent carbon atoms constituting the alicycle.

Non-limiting examples of the cycloaliphatic epoxy compound include compounds represented by Formula (a):

[Chem. 2]

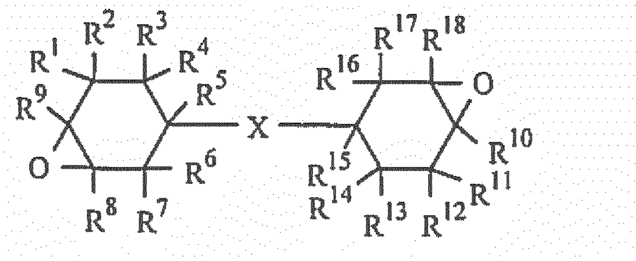

(a)

In Formula (a), $R^1$ to $R^{18}$ are each, identically or differently, selected from hydrogen, halogen, a hydrocarbon group optionally containing oxygen or halogen, and optionally substituted alkoxy; and X is selected from a single bond and a linkage group.

Non-limiting examples of the halogen as $R^1$ to $R^{18}$ include fluorine, chlorine, bromine, and iodine.

The hydrocarbon group as $R^1$ to $R^{18}$ is preferably selected from $C_1$-$C_{20}$ hydrocarbon groups. The category "hydrocarbon group" includes aliphatic hydrocarbon groups, alicyclic hydrocarbon groups, aromatic hydrocarbon groups, and groups including two or more of these groups bonded to each other.

Of the aliphatic hydrocarbon groups, preferred are $C_1$-$C_{20}$ aliphatic hydrocarbon groups exemplified typically by $C_1$-$C_{20}$ alkyls such as methyl, ethyl, propyl, isopropyl, butyl, hexyl, octyl, isooctyl, decyl, and dodecyl, of which $C_1$-$C_{10}$ alkyls are preferred, and $C_1$-$C_4$ alkyls are particularly preferred; $C_2$-$C_{20}$ alkenyls such as vinyl, allyl, methallyl, 1-propenyl, isopropenyl, 1-butenyl, 2-butenyl, 3-butenyl, 1-pentenyl, 2-pentenyl, 3-pentenyl, 4-pentenyl, and 5-hexenyl, of which $C_2$-$C_{10}$ alkenyls are preferred, and $C_2$-$C_4$ alkenyls are particularly preferred; and $C_2$-$C_{20}$ alkynyls such as ethynyl and propynyl, of which $C_2$-$C_{10}$ alkynyls are preferred, and $C_2$-$C_4$ alkynyls are particularly preferred.

Of the alicyclic hydrocarbon groups, preferred are $C_3$-$C_{15}$ alicyclic hydrocarbon groups exemplified typically by $C_3$-$C_{12}$ cycloalkyls such as cyclopropyl, cyclobutyl, cyclopentyl, cyclohexyl, and cyclododecyl; $C_3$-$C_{12}$ cycloalkenyls such as cyclohexenyl; and $C_4$-$C_{15}$ bridged hydrocarbon groups such as bicycloheptyl and bicycloheptenyl.

Of the aromatic hydrocarbon groups, preferred are $C_6$-$C_{14}$ aromatic hydrocarbon groups, exemplified typically

by $C_6$-$C_{14}$ aryls such as phenyl and naphthyl, of which $C_6$-$C_{10}$ aryls are preferred.

Of the groups each including two or more groups selected from the aliphatic hydrocarbon groups, alicyclic hydrocarbon groups, and aromatic hydrocarbon groups bonded to each other, non-limiting examples of the groups each including an aliphatic hydrocarbon group and an alicyclic hydrocarbon group bonded to each other include $C_3$-$C_{12}$ cycloalkyl-substituted $C_1$-$C_{20}$ alkyls such as cyclohexylmethyl; and $C_1$-$C_{20}$ alkyl-substituted $C_3$-$C_{12}$ cycloalkyls such as methylcyclohexyl. Non-limiting examples of the groups each including an aliphatic hydrocarbon group and an aromatic hydrocarbon group bonded to each other include $C_7$-$C_{18}$ aralkyls such as benzyl and phenethyl, of which $C_7$-$C_{10}$ aralkyls are typified; $C_6$-$C_{14}$ aryl-substituted $C_2$-$C_{20}$ alkenyls such as cinnamyl; $C_1$-$C_{20}$ alkyl-substituted $C_6$-$C_{14}$ aryls such as tolyl; $C_2$-$C_{20}$ alkenyl-substituted $C_6$-$C_{14}$ aryls such as styryl.

Non-limiting examples of the hydrocarbon group optionally containing oxygen or halogen, as $R^1$ to $R^{18}$, include groups resulting from replacing at least one hydrogen atom in the hydrocarbon groups with an oxygen-containing group or a halogen-containing group. Non-limiting examples of the oxygen-containing group include hydroxy; hydroperoxy; $C_1$-$C_{10}$ alkoxys such as methoxy, ethoxy, propoxy, isopropyloxy, butoxy, and isobutyloxy; $C_2$-$C_{10}$ alkenyloxys such as allyloxy; tolyloxy, naphthyloxy, and other $C_6$-$C_{14}$ aryloxys optionally substituted with one or more substituents selected from $C_1$-$C_{10}$ alkyls, $C_2$-$C_{10}$ alkenyls, halogens, and $C_1$-$C_{10}$ alkoxys; $C_7$-$C_{18}$ aralkyloxys such as benzyloxy and phenethyloxy; $C_1$-$C_{10}$ acyloxys such as acetyloxy, propionyloxy, (meth)acryloyloxy, and benzoyloxy; $C_1$-$C_{10}$ alkoxy-carbonyls such as methoxycarbonyl, ethoxycarbonyl, propoxycarbonyl, and butoxycarbonyl; phenoxycarbonyl, tolyloxycarbonyl, naphthyloxycarbonyl, and other $C_6$-$C_{14}$ aryloxy-carbonyls optionally substituted with one or more substituents selected from $C_1$-$C_{10}$ alkyls, $C_2$-$C_{10}$ alkenyls, halogens, and $C_1$-$C_{10}$ alkoxys; $C_7$-$C_{18}$ aralkyloxy-carbonyls such as benzyloxycarbonyl; epoxy-containing groups such as glycidyloxy; oxetanyl-containing groups such as ethyloxetanyloxy; $C_1$-$C_{10}$ acyls such as acetyl, propionyl, and benzoyl; isocyanato; sulfo; carbamoyl; oxo; and groups each including two or more of these groups bonded to each other through a single bond or a linkage group such as $C_1$-$C_{10}$ alkylene. Non-limiting examples of the halogen-containing group include fluorine, chlorine, bromine, and iodine.

Non-limiting examples of the alkoxy as $R^1$ to $R^{18}$ include $C_1$-$C_{10}$ alkoxys such as methoxy, ethoxy, propoxy, isopropyloxy, butoxy, and isobutyloxy.

Examples of substituents which the alkoxy may have include halogen, hydroxy, $C_1$-$C_{10}$ alkoxys, $C_2$-$C_{10}$ alkenyloxys, $C_6$-$C_{14}$ aryloxys, $C_1$-$C_{10}$ acyloxys, mercapto, $C_1$-$C_{10}$ alkylthios, $C_2$-$C_{10}$ alkenylthios, $C_6$-$C_{14}$ arylthios, $C_7$-$C_{18}$ aralkylthios, carboxy, $C_1$-$C_{10}$ alkoxy-carbonyls, $C_6$-$C_{14}$ aryloxy-carbonyls, $C_7$-$C_{16}$ aralkyloxy-carbonyls, amino, mono- or di-$C_1$-$C_{10}$ alkylaminos, $C_1$-$C_{10}$ acylaminos, epoxy-containing groups, oxetanyl-containing groups, $C_1$-$C_{10}$ acyls, oxo, and groups each including two or more of these groups bonded to each other through a single bond or a linkage group such as $C_1$-$C_{10}$ alkylene.

In particular, $R^1$ to $R^{18}$ are preferably hydrogen atoms.

X in Formula (a) is selected from a single bond and a linkage group (divalent group containing one or more atoms). Non-limiting examples of the linkage group include divalent hydrocarbon groups, alkenylenes with part or all of carbon-carbon double bond(s) being epoxidized, carbonyl, ether bond, ester bond, amido, and groups each including two or more of these groups linked to each other.

Non-limiting examples of the divalent hydrocarbon groups include linear or branched $C_1$-$C_{18}$ alkylenes such as methylene, methylmethylene, dimethylmethylene, ethylene, propylene, and trimethylene, of which linear or branched $C_1$-$C_3$ alkylenes are preferred; and $C_3$-$C_{12}$ cycloalkylenes and $C_3$-$C_{12}$ cycloalkylidenes, such as 1,2-cyclopentylene, 1,3-cyclopentylene, cyclopentylidene, 1,2-cyclohexylene, 1,3-cyclohexylene, 1,4-cyclohexylene, and cyclohexylidene, of which $C_3$-$C_6$ cycloalkylenes and $C_3$-$C_6$ cycloalkylidenes are preferred.

The alkenylenes with part or all of carbon-carbon double bond(s) being epoxidized are hereinafter also referred to as "epoxidized alkenylenes". Non-limiting examples of alkenylenes from which the epoxidized alkenylenes are derived include $C_2$-$C_8$ linear or branched alkenylenes such as vinylene, propenylene, 1-butenylene, 2-butenylene, butadienylenes, pentenylenes, hexenylenes, heptenylenes, and octenylenes. In particular, of the epoxidized alkenylenes, preferred are alkenylenes with all of carbon-carbon double bond(s) being epoxidized, and more preferred are $C_2$-$C_4$ alkenylenes with all of carbon-carbon double bond(s) being epoxidized.

Representative, but non-limiting examples of the compound represented by Formula (a) include 3,4-epoxycyclohexylmethyl (3,4-epoxy)cyclohexanecarboxylate, (3,4,3',4'-diepoxy)bicyclohexyl, bis(3,4-epoxycyclohexylmethyl) ether, 1,2-epoxy-1,2-bis(3,4-epoxycyclohex-1-yl)ethane, 2,2-bis(3,4-epoxycyclohex-1-yl)propane, and 1,2-bis(3,4-epoxycyclohex-1-yl)ethane. The curable composition may contain each of them alone or in combination. These compounds are preferred because of offering a low contraction coefficient or a low expansion coefficient upon curing.

The epoxy compound (A) may further include one or more other epoxy compounds, in addition to the cycloaliphatic epoxy compound. For adjustment of refractive index, the epoxy compound (A) preferably includes a glycidyl ether epoxy compound (in particular, at least one of an aromatic glycidyl ether epoxy compound and an alicyclic glycidyl ether epoxy compound).

The curable composition contains the epoxy compound (A) in a content of typically 30 to 90 weight percent, preferably 50 to 90 weight percent, and particularly preferably 60 to 85 weight percent, of the totality (100 weight percent)

of all curable compounds contained in the curable composition. When the curable composition contains two or more different epoxy compounds (A), the term "content" is read as "total content" of them. The curable composition, if containing the component (A) in a content less than the range, tends to cause the cured product to have lower strength. In contrast, the curable composition, if containing the component (A) in a content greater than the range, tends to cause the cured product to have lower curability.

The curable composition may contain the cycloaliphatic epoxy compound in a content of typically 30 to 80 weight percent, preferably 30 to 70 weight percent, and particularly preferably 40 to 60 weight percent, of the totality (100 weight percent) of all curable compounds contained in the curable composition. When the curable composition contains two or more different cycloaliphatic epoxy compounds, the term "content" is read as "total content" of them. The curable composition, if containing the cycloaliphatic epoxy compound in a content less than the range, tends to offer lower curability. In contrast, the curable composition, if containing the cycloaliphatic epoxy compound in a content greater than the range, tends to cause the cured product to become brittle.

Oxetane Compound (B)

In addition to the epoxy compound (A), the curable composition for use in the present invention may contain another curable compound (in particular, another cationically curable compound), and preferably contains an oxetane compound for giving a cured product with better curability.

The oxetane compound is represented typically by Formula (b):

[Chem. 3]

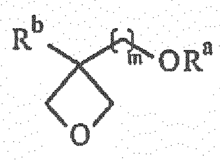

(b)

wherein $R^a$ represents a monovalent organic group; $R^b$ is selected from hydrogen and ethyl; and m represents an integer of 0 or more.

The category "monovalent organic group" as $R^a$ includes monovalent hydrocarbon groups, monovalent heterocyclic groups, substituted oxycarbonyls (such as alkoxycarbonyls, aryloxycarbonyls, aralkyloxycarbonyls, and cycloalkyloxycarbonyls), substituted carbamoyls (such as N-alkylcarbamoyls and N-arylcarbamoyls), acyls (exemplified by aliphatic acyls such as acetyl; and aromatic acyls such as benzoyl), and monovalent groups each including two or more of these groups bonded to each other through a single bond or a linkage group.

Non-limiting examples of the monovalent hydrocarbon groups are as with $R^1$ to $R^{18}$ in Formula (a).

The monovalent hydrocarbon groups may each have one or more of various substituents. Non-limiting examples of the substituents include halogens, oxo, hydroxy, substituted oxys (such as alkoxys, aryloxys, aralkyloxys, and acyloxys), carboxy, substituted oxycarbonyls (such as alkoxycarbonyls, aryloxycarbonyls, and aralkyloxycarbonyls), substituted or unsubstituted carbamoyls, cyano, nitro, substituted or unsubstituted aminos, sulfo, and heterocyclic groups. The hydroxy and carboxy may each be protected with a protecting group generally used in the field of organic synthesis.

Examples of heterocycles constituting the heterocyclic groups include, but are not limited to, 3- to 10-membered rings (preferably 4- to 6-membered rings) each containing, as atoms constituting the ring, one or more carbon atoms and at least one type of heteroatom (such as oxygen, sulfur, or nitrogen); and fused rings derived from these rings. Specifically, non-limiting examples of the heterocycles include oxygen-containing heterocycles, sulfur-containing heterocycles, and nitrogen-containing heterocycles, where oxygen, sulfur, and nitrogen are contained as heteroatoms. Non-limiting examples of the oxygen-containing heterocycles include 4-membered rings such as oxetane ring; 5-membered rings such as furan, tetrahydrofuran, oxazole, isoxazole, and $\gamma$-butyrolactone rings; 6-membered rings such as 4-oxo-4H-pyran, tetrahydropyran, and morpholine rings; fused rings such as benzofuran, isobenzofuran, 4-oxo-4H-chromene, chroman, and isochroman rings; and bridged rings such as 3-oxatricyclo[4.3.1.1$^{4,8}$]undecan-2-one and 3-oxatricyclo[4.2.1.0$^{4,8}$]nonan-2-one rings. Non-limiting examples of the sulfur-containing heterocycles include 5-membered rings such as thiophene, thiazole, isothiazole, and thiadiazole rings; 6-membered rings such as 4-oxo-4H-thiopyran ring; and fused rings such as benzothiophene ring. Non-limiting examples of the nitrogen-containing heterocycles include 5-membered rings such as pyrrole, pyrrolidine, pyrazole, imidazole, and triazole rings; 6-membered rings such as pyridine, pyridazine, pyrimidine, pyrazine, piperidine, and piperazine rings; and fused rings such as indole, indoline, quinoline, acridine, naphthyridine, quinazoline, and purine rings. Non-limiting examples of the monovalent heterocyclic groups include groups resulting from removing one hydrogen atom each from the structural formulae of the heterocycles.

The heterocyclic groups may each have one or more substituents. Non-limiting examples of the substituents include the substituents which the hydrocarbon groups may have; as well as alkyls (such as methyl, ethyl, and other $C_1$-$C_4$ alkyls), cycloalkyls (such as $C_3$-$C_{12}$ cycloalkyls), and aryls (such as phenyl, naphthyl, and other $C_6$-$C_{14}$ aryls).

Non-limiting examples of the linkage group include carbonyl (-CO-), ether bond (-O-), thioether bond (-S-), ester bond (-COO-), amido bond (-CONH-), carbonate bond (-OCOO-), silyl bond (-Si-), and groups each including two or more of these groups linked to each other.

Non-limiting examples of the compound represented by Formula (b) include 3-methoxyoxetane, 3-ethoxyoxetane, 3-propoxyoxetane, 3-isopropoxyoxetane, 3-(n-butoxy)oxetane, 3-isobutoxyoxetane, 3-(s-butoxy)oxetane, 3-(t-butoxy)oxetane, 3-pentyloxyoxetane, 3-hexyloxyoxetane, 3-heptyloxyoxetane, 3-octyloxyoxetane, 3-(1-propenyloxy)oxetane, 3-cyclohexyloxyoxetane, 3-(4-methylcyclohexyloxy)oxetane, 3-[(2-perfluorobutyl)ethoxy]oxetane, 3-phenoxyoxetane, 3-(4-methylphenoxy)oxetane, 3-(3-chloro-1-propoxy)oxetane, 3-(3-bromo-1-propoxy)oxetane, 3-(4-fluorophenoxy)oxetane, and compounds represented by Formulae (b-1) to (b-15):

[Chem. 4]

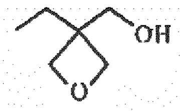
(b-1)

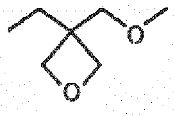
(b-2)

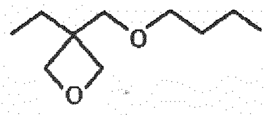
(b-3)

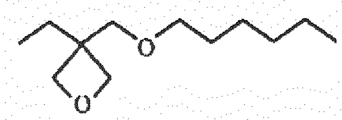
(b-4)

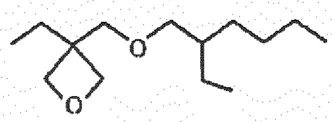
(b-5)

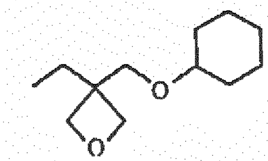
(b-6)

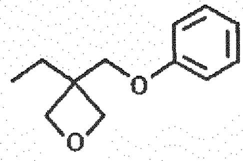
(b-7)

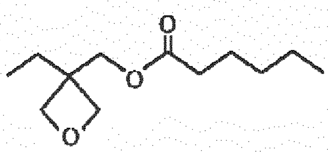
(b-8)

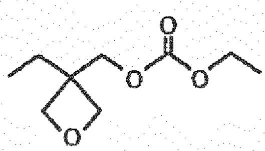
(b-9)

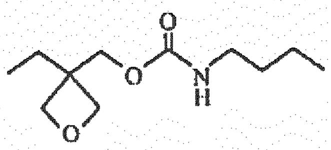
(b-10)

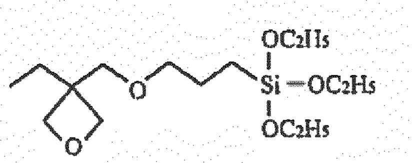
(b-11)

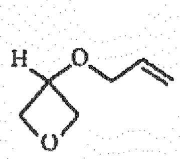
(b-12)

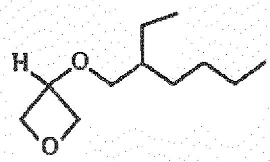
(b-13)

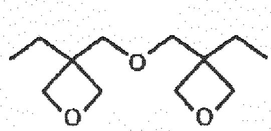
(b-14)

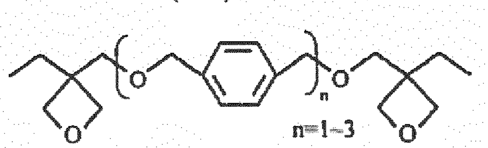
(b-15)

Such oxetane compounds for use herein may be available as commercial products such as ARON OXETANE OXT-101, ARON OXETANE OXT-121, ARON OXETANE OXT-212, ARON OXETANE OXT-211, ARON OXETANE OXT-213, ARON OXETANE OXT-221, and ARON OXETANE OXT-610 (each from Toagosei Co., Ltd.).

The curable composition may contain the oxetane compound in a content of typically 5 to 40 weight percent, preferably 5 to 30 weight percent, and particularly preferably 10 to 30 weight percent, of the totality (100 weight percent) of all curable compounds contained in the curable composition. When the curable composition contains two or more different oxetane compounds, the term "content" is read as "total content" of them. Advantageously, the curable composition, when containing the oxetane compound in a content within the range, effectively offers better curability while allowing the cured product to have satisfactory strengths.

Other Curable Compounds

The curable composition for use in the present invention may further contain another curable compound than the epoxy compounds (A) and the oxetane compounds (B). However, the content of the other curable compound is typically 30 weight percent or less, preferably 20 weight percent or less, particularly preferably 10 weight percent or less, and most preferably 5 weight percent or less, of the totality (100 weight percent) of all curable compounds contained in the curable composition. When the curable composition contains two or more different other curable compounds, the term "content" is read as "total content" of them. The curable composition, if containing the other curable compound in a content greater than the range, tends to less offer advantageous effects of the present invention.

Cationic Initiator (C)

The curable composition for use in the present invention preferably contains a cationic initiator (cationic polymerization initiator). The category "cationic initiator" includes cationic photoinitiators and cationic thermal initiators.

The cationic photoinitiators are compounds that generate an acid upon application of light to initiate curing reactions of cationically curable compounds contained in the curable composition. The cationic photoinitiators each include a cationic moiety that absorbs light, and an anionic moiety that serves as an acid source. The curable composition may contain each of different cationic photoinitiators alone or in combination.

Non-limiting examples of the cationic photoinitiator for use in the present invention include diazonium salt compounds, iodonium salt compounds, sulfonium salt compounds, phosphonium salt compounds, selenium salt compounds, oxonium salt compounds, ammonium salt compounds, and bromine salt compounds.

Among them, the cationic photoinitiator for use in the present invention is preferably selected from sulfonium salt compounds, because the resulting curable composition can form a cured product with excellent curability. Non-limiting examples of the cationic moieties of the sulfonium salt compounds include arylsulfonium ions such as (4-hydroxyphenyl)methylbenzylsulfonium ion, triphenylsulfonium ion, diphenyl[4-(phenylthio)phenyl]sulfonium ion, 4-(4-biphenylylthio)phenyl-4-biphenylylphenylsulfonium ion, and tri-p-tolylsulfonium ion, of which triarylsulfonium ions are typified.

Non-limiting examples of the anionic moieties of the cationic photoinitiators include $[(Y)_kB(Phf)_{4-k}]^-$ (where Y is selected from phenyl and biphenylyl; Phf represents a phenyl group with at least one selected from perfluoroalkyls, perfluoroalkoxys, and halogens replacing at least one of hydrogen atoms thereof; and k represents an integer of 0 to 3), $BF_4^-$, $PF_6^-$, $[(Rf)_tPF_{6-t})^-$ (where Rf represents an alkyl group with fluorine atom atoms replacing 80% or more of hydrogens thereof; and t represents an integer of 1 to 5), $AsF_6^-$, $SbF_6^-$, and $SbF_5OH^-$. Among them, cationic photoinitiators containing $SbF_6^-$ as the anionic moiety are preferred in the present invention, because these cationic photoinitiators have high activity as initiators, and can give a highly heat-resistant cured product with excellent curability.

Non-limiting examples of such cationic photoinitiators for use in the present invention include (4-hydroxyphenyl)methylbenzylsulfonium tetrakis(pentafluorophenyl)borate, 4-(4-biphenylylthio)phenyl-4-biphenylylphenylsulfonium tetrakis(pentafluorophenyl)borate, 4-(phenylthio)phenyldiphenylsulfonium phenyltris(pentafluorophenyl)borate, [4-(4-biphenylylthio)phenyl]-4-biphenylylphenylsulfonium phenyltris(pentafluorophenyl)borate, diphenyl[4-(phenylthio)phenylsulfonium] hexafluoroantimonate, diphenyl[4-(phenylthio)phenyl]sulfonium tris(pentafluoroethyl)trifluorophosphate, diphenyl[4-(phenylthio)phenyl]sulfonium tetrakis(pentafluorophenyl)borate, diphenyl[4-(phenylthio)phenyl]sulfonium hexafluorophosphate, 4-(4-biphenylylthio)phenyl-4-biphenylylphenylsulfonium tris(pentafluoroethyl)trifluorophosphate, bis[4-(diphenylsulfonio)phenyl]sulfide phenyltris(pentafluorophenyl)borate, and [4-(2-thioxanthonylthio)phenyl]phenyl-2-thioxanthonylsulfonium phenyltris(pentafluorophenyl)borate. Such cationic photoinitiators may also be selected from commercial products available typically under the trade names of: CYRACURE UVI-6970, CYRACURE UVI-6974, CYRACURE UVI-6990, and CYRACURE UVI-950 (each from Union Carbide Corporation, U.S.A.); Irgacure 250, Irgacure 261, Irgacure 264, and CG-24-61 (each from BASF SE); CG-24-61 (from Ciba Geigy Ltd); OPTOMER SP-150, OPTOMER SP-151, OPTOMER SP-170, and OPTOMER SP-171 (each from ADEKA CORPORATION); DAICAT II (from Daicel Corporation); UVAC 1590 and UVAC 1591 (each from DAICEL-CYTEC Company, Ltd.); CI-2064, CI-2639, CI-2624, CI-2481, CI-2734, CI-2855, CI-2823, CI-2758, and CIT-1682 (each from Nippon Soda Co., Ltd.); PI-2074 (from Rhodia, (tolylcumyl)iodonium tetrakis(pentafluorophenyl)borate); FFC 509 (from 3M Company); BBI-102, BBI-101, BBI-103, MPI-103, TPS-103, MDS-103, DTS-103, NAT-103, and NDS-103 (each from Midori Kagaku Co., Ltd.); CD-1010, CD-1011, and CD-1012 (each from Sartomer Company, Inc., U.S.A.); and CPI-100P and CPI-101A (each from San-Apro Ltd.).

The cationic thermal initiators are compounds that generate an acid upon application of heat (heat treatment) to initiate curing reactions of cationically curable compounds contained in the curable composition and each include a cationic moiety that absorbs heat, and an anionic moiety that serves as an acid source. The curable composition may contain each of different cationic thermal initiators alone or in combination.

Non-limiting examples of the cationic thermal initiators for use in the present invention include iodonium salt compounds and sulfonium salt compounds.

Non-limiting examples of the cationic moieties of the cationic thermal initiators include 4-hydroxyphenyl-methyl-benzylsulfonium, 4-hydroxyphenyl-methyl-(2-methylbenzyl)sulfonium, 4-hydroxyphenyl-methyl-1-naphthylmethylsulfonium, and p-methoxycarbonyloxyphenyl-benzyl-methylsulfonium, of which monoarylsulfonium ions are typified.

Non-limiting examples of the anionic moieties of the cationic thermal initiators are as with the anionic moieties of the cationic photoinitiators.

Non-limiting examples of the cationic thermal initiators include 4-hydroxyphenyl-methyl-benzylsulfonium phenyltris(pentafluorophenyl)borate, 4-hydroxyphenyl-methyl-(2-methylbenzyl)sulfonium phenyltris(pentafluorophenyl)borate, 4-hydroxyphenyl-methyl-1-naphthylmethylsulfonium phenyltris(pentafluorophenyl)borate, and p-methoxycarbonyloxyphenyl-benzyl-methylsulfonium phenyltris(pentafluorophenyl)borate.

In particular, the curable composition for use in the present invention preferably contains a cationic photoinitiator, for offering excellent storage stability.

The curable composition may contain the cationic initiator in a proportion of typically 0.1 to 10.0 parts by weight, preferably 0.1 to 5.0 parts by weight, particularly preferably 0.2 to 3.0 parts by weight, and most preferably 0.2 to 1.0 part by weight, per 100 parts by weight of a curable compound contained in the curable composition (in particular, a cationically curable compound; when two or more different curable compounds are contained, the totality of them). The curable composition, if containing the cationic initiator in a content less than the range, tends to offer lower curability. In contrast, the curable composition, if containing the cationic initiator in a content greater than the range, tends to cause the cured product to be susceptible to coloring.

Other Components

The curable composition for use in the present invention may further contain one or more other components than the epoxy compounds (A), the oxetane compounds (B), and the polymerization initiators (C), within a range not adversely affecting advantageous effects of the present invention. Non-limiting examples of the other components include antioxidants, photosensitizers, antifoaming agents, surface modifiers, coupling agents, surfactants, flame retardants, and ultraviolet absorbers. The curable composition may contain each of them alone or in combination.

Non-limiting examples of the surface modifier include silicone, acrylic, and fluorochemical surfactants. The curable composition, when incorporated with such a surface modifier, can have better wettability with a mold, and this effectively restrains bubble entrainment in charging of the curable composition into the mold. In particular, the surface modifier for use in the present invention is preferably selected from silicone surfactants, because this configuration particularly effectively restrains bubble entrainment.

Non-limiting examples of the silicone surfactants include polyether-modified polydimethylsiloxanes, polyester-modified polydimethylsiloxanes, acryl-containing polyether-modified polydimethylsiloxanes, and acryl-containing polyester-modified polydimethylsiloxanes. Such silicone surfactants for use in the present invention are advantageously selected from commercial products available typically under the trade names of: BYK-333, BYK-345, BYK-UV 3510, BYK-UV 3500, BYK-UV 3530, and BYK-UV 3570 (each from BYG Japan KK).

The curable composition may contain the surface modifier in a proportion of typically 0.01 to 3 parts by weight, preferably 0.03 to 2 parts by weight, and particularly preferably 0.1 to 1 part by weight, per 100 parts by weight of the totality of all curable compounds contained in the curable composition. When the curable composition contains two or more different surface modifiers, the term "proportion" is read as "total proportion" of them.

Non-limiting examples of the antioxidants include phenolic antioxidants, phosphorus antioxidants, thio ester antioxidants, and amine antioxidants. The curable composition for use in the present invention preferably contains at least one of a phenolic antioxidant and a phosphorus antioxidant so as to allow the resulting cured product to have still better heat resistance.

Non-limiting examples of the phenolic antioxidants include pentaerythritol tetrakis[3-(3,5-di-t-butyl-4-hydroxyphenyl) propionate], thiodiethylene bis[3-(3,5-di-t-butyl-4-hydroxyphenyl) propionate], octadecyl 3-(3,5-di-t-butyl-4-hydroxyphenyl)propanoate, N,N'-hexamethylenebis[3-(3,5-di-t-butyl-4-hydroxyphenyl)propionamide], octyl 3-(4-hydroxy-3,5-diisopropylphenyl)propionate, 1,3,5-tris(4-hydroxy-3,5-di-t-butylbenzyl)-2,4,6-trimethylbenzene, 2,4-bis(dodecylthiomethyl)-6-methylphenol, and calcium bis[3,5-di(t-butyl)-4-hydroxybenzyl(ethoxy)phosphinate]. Such phenolic antioxidants for use in the present invention may be available as commercial products typically under the trade names of: Irganox 1010, Irganox 1035, Irganox 1076, Irganox 1098, Irganox 1135, Irganox 1330, Irganox 1726, and Irganox 1425WL (each from BASF SE).

Non-limiting examples of the phosphorus antioxidants include 3,9-bis(octadecyloxy)-2,4,8,10-tetraoxa-3,9-diphosphaspiro[5.5]undecane, 3,9-bis(2,6-di-t-butyl-4-methylphenoxy)-2,4,8, 10-tetraoxa-3,9-diphosphaspiro[5.5]undecane, 2,2'-methylenebis(4,6-di-t-butylphenyl)-2-ethylhexyl phosphite, and tris(2,4-di-t-butylphenyl) phosphite. Such phosphorus antioxidants for use in the present invention may be available as commercial products typically under the trade names of: PEP-8, PEP-8W, PEP-36/36A, HP-10, 2112, 2112RG, and 1178 (each from ADEKA CORPORATION).

The curable composition may contain the antioxidant in a proportion of typically 0.1 to 10.0 parts by weight,

preferably 0.5 to 5.0 parts by weight, and particularly preferably 0.5 to 3.0 parts by weight, per 100 parts by weight of a curable compound contained in the curable composition (in particular, a cationically curable compound; when two or more different curable compounds are contained, the totality of them). When the curable composition contains two or more different antioxidants, the term "proportion" is read as "total proportion" of them.

The curable composition for use in the present invention can be prepared typically by stirring and mixing the components in predetermined proportions and, as needed, degassing (debubbling) the mixture in a vacuum.

The curable composition for use in the present invention has a viscosity of typically 100 to 1000 mPa·s; and the upper limit of the viscosity is preferably 500 mPa·s, particularly preferably 400 mPa·s, especially preferably 350 mPa·s, and most preferably 250 mPa·s, as determined at 25°C and a shear rate of 20 $s^{-1}$. The curable composition therefore has excellent chargeability into a mold, less causes bubble entrainment, and can give highly accurate/precise optical components with excellent shape transferability.

In addition, the curable composition for use in the present invention has excellent curability and, upon application of at least one of light and heat, can be rapidly cured to form a cured product.

A curable composition containing a cationic photoinitiator as the cationic initiator (C) can be cured by the application of light (photoirradiation). The light (actinic radiation) for use in the photoirradiation can be selected from any actinic radiation such as infrared rays, visible light, ultraviolet rays, X rays, electron beams, alpha rays, beta rays, and gamma rays. Among them, ultraviolet rays are preferred in the present invention for their excellent handleability. The application of ultraviolet rays may be performed using a light source such as UV-LEDs (wavelength: 350 to 450 nm), high-pressure mercury lamps, ultra-high pressure mercury lamps, xenon lamps, carbon arc, metal halide lamps, sunlight, and laser systems. The curable composition for use in the present invention has excellent curability, on which a curing reaction can proceed rapidly even by photoirradiation using a UV-LED.

The conditions for the photoirradiation, when performed as ultraviolet irradiation, are preferably adjusted so that the cumulative irradiance be typically 5000 mJ/$cm^2$ or less (for example, 2500 to 5000 mJ/$cm^2$).

After the photoirradiation, the work may be subjected to a post-bake treatment (such as heating at 80°C to 180°C for 5 to 30 minutes) as needed.

A curable composition containing a cationic thermal initiator as the cationic initiator (C) can be cured by a heat treatment (such as heating at a temperature of about 100°C to about 200°C for about 0.5 to about 2 hours).

The cured product has excellent heat resistance and has a decomposition temperature of typically 200°C or higher (for example, 200°C to 500°C), preferably 260°C or higher, particularly preferably 330°C or higher, and most preferably 350°C or higher, where the decomposition temperature is determined by the method described in the working examples. The cured product can therefore maintain its shape even when subjected to a board-level mounting process including soldering (in particular, soldering using a lead-free solder) using a reflow oven.

Optical Component

The optical component according to the present invention is an optical component including the cured product of the curable composition; and at least one coating layer having a thickness of 0.1 mm or less on part of the cured product.

The coating layer has a thickness (thickness per one layer) of 0.1 mm or less (for example, 0.005 to 0.1 mm), preferably 0.09 mm or less (for example, 0.01 to 0.09 mm), and particularly preferably 0.08 mm or less (for example, 0.01 to 0.08 mm).

The number of the coating layer or layers is not limited, can be adjusted as appropriate according to necessity, and is typically 1 to about 5. When the optical component includes two or more coating layers, the individual coating layers may be identical or different.

The coating layer or layers have a total thickness of typically 10 to 500 $\mu$m, preferably 15 to 300 $\mu$m, particularly preferably 15 to 100 $\mu$m, and most preferably 15 to 50 $\mu$m.

The location in which the coating layer is disposed in the optical component can be adjusted as appropriate according to the intended use. For example, assume that the optical component is a lens, and a coating layer is formed on the lens to impart reflectivity or light-shielding ability to the lens. In this case, the coating layer is preferably formed on the periphery of the lens.

For example, the optical component according to the present invention, when including a white coating layer, can have reflectivity. The optical component according to the present invention, when including a black coating layer, can have light-shielding ability.

For example, assume that the optical component according to the present invention is a flash lens. Such flash lens is to be used together with an imaging camera, and, light leakage from the flash lens, if occurring, may adversely affect the imaging camera. To eliminate or minimize this, the flash lens preferably has high light-shielding ability and is preferably provided with a coating layer having a transmittance of typically 5% or less (in particular, 1% or less). The flash lens preferably has high reflectivity for better light extraction efficiency and is preferably provided with a coating layer having a reflectance of typically 60% or more (in particular, 70% or more).

A coating material to form the coating layer contains, for example, a resin, a colorant (pigment), a solvent, and an additive. Non-limiting examples of the additive include flame retardants, lubricants, antimicrobial agents, and antistatic agents.

Non-limiting examples of the resin include polyolefin resins, polystyrene resins, vinyl chloride resins, fluorocarbon resins, acrylic resins, unsaturated polyesters, epoxy resins, polyurethane resins, and phenolic resins. The coating material may contain each of them alone or in combination.

Examples of the colorant include inorganic pigments and organic pigments. Non-limiting examples of the inorganic pigments include titanium oxide, zinc oxide, chromium oxide, iron oxide, carbon black, ultramarine, black titanium oxide, acetylene black, lampblack, bone black, graphite, iron black, copper chrome black, copper iron manganese black, chromium cobalt iron black, ruthenium oxide, graphite, fine particles of metals such as aluminum, fine particles of metal oxides, fine particles of composite oxides, fine particles of metal sulfides, and fine particles of metal nitrides. Non-limiting examples of the organic pigments include perylene black, cyanine black, aniline black, azo pigments, anthraquinone pigments, isoindolinone pigments, indanthrene pigments, indigo pigments, quinacridone pigments, dioxazine pigments, tetraazaporphyrin pigments, triarylmethane pigments, phthalocyanine pigments, perylene pigments, benzimidazolone pigments, and rhodamine pigments. The coating material may contain each of them alone or in combination.

Non-limiting examples of the solvent include aromatic solvents such as toluene and xylene; and ester solvents such as ethyl acetate. The coating material may contain each of them alone or in combination.

The contents of components in the coating material are not limited and can be adjusted as appropriate according to necessity.

The optical component (including the coating layer) has a maximum thickness of 2 mm or less (for example, 0.1 to 2 mm), preferably 1.8 mm or less (for example, 0.1 to 1.8 mm), and particularly preferably 1.6 mm or less (for example, 0.1 to 1.6 mm).

The optical component has a maximum width in a plan view (maximum width in a plan view observe from right above) of 10 mm or less (for example, 1 to 10 mm), preferably 8 mm or less (for example, 1 to 8 mm), particularly preferably 7 mm or less (for example, 1 to 7 mm), and especially preferably 5 mm or less (for example, 1 to 5 mm).

Examples of the optical component according to the present invention include, but are not limited to, lenses. Non-limiting examples of such lenses include Fresnel lenses, of which particularly preferred are Fresnel lenses for flash systems of cameras, where the cameras are exemplified typically by imaging cameras for use in smartphones and other portable electronic devices; and Fresnel lenses for infrared sensors.

The "Fresnel lens" is a lens that has two or more triangular prisms and effectively diffuses or condenses light, where the prisms define a sawtooth-profile surface of the lens and each have a reflection surface (surface that changes or bends the traveling direction of light) and a refracting surface (surface that transmits light). The two or more triangular prisms successively decrease (or increase) in size toward the center (for example, FIG. 1).

## Optical Component Production Method

The optical component according to the present invention is produced by cast molding, and, more specifically, through the following steps 1, 2, and 3.

The step 1 is the step of charging a curable composition containing an epoxy compound (A) into a mold having two or more optical-component concave patterns (two or more concave patterns corresponding to the target optical component), and thereafter applying at least one of light and heat to give a cured product having two or more optical-component forms (two or more forms corresponding to the target optical component).

The step 2 is the step of separating the cured product into separated articles.

The step 3 is the step of forming a coating layer or layers on the separated articles.

The mold has two or more concave patterns corresponding to a desired optical component (namely, concavities each having a reversed shape of the optical component such as a Fresnel lens). The two or more optical-component concave patterns may be disposed at random or at regular intervals. In particular, a mold including two or more optical-component concave patterns disposed at regular intervals is preferably used for providing excellent workability typically in separation of the cured product into separated articles.

Non-limiting examples of the technique of charging the curable composition into the mold in the step 1 include technique using a dispenser, screen process printing technique, curtain coating technique, and spraying technique. The curable composition for use in the present invention has excellent fluidity, thereby has high chargeability, and enables production of Fresnel lenses to which the mold shape is transferred excellently (i.e., on which the cavity shape of the mold is excellently reproduced). The mold may include two or more parts such as an upper part (cope) and a lower part (drag). The mold may have undergone a surface release treatment (such as coating with a mold release agent).

Non-limiting examples of the material to constitute the mold include metals, glass, plastics, and silicones. Among them, the mold is preferably selected from silicone molds (such as silicone molds made from polydimethylsiloxanes), because such silicone molds have transparency, can thereby used in molding of curable compositions that cure by

photoirradiation, and have shape transferability and mold releasability at excellent levels.

The "application of at least one of light and heat" in the step 1 is performed as photoirradiation when a curable composition containing a cationic photoinitiator as the cationic initiator (C) is used; and is performed as heat treatment when a curable composition containing a cationic thermal initiator as the cationic initiator (C) is used.

The light (actinic radiation) for use in the photoirradiation can be selected from any of actinic radiation such as infrared rays, visible light, ultraviolet rays, X rays, electron beams, alpha rays, beta rays, and gamma rays. Among them, ultraviolet rays are preferably employed in the present invention, for their excellent handleability. Such ultraviolet rays may be applied using light sources such as UV-LEDs (wavelength: 350 to 450 nm), high-pressure mercury lamps, ultra-high pressure mercury lamps, xenon lamps, carbon arc, metal halide lamps, sunlight, and laser systems. The curable composition for use in the present invention has excellent curability and allows a curing reaction to proceed rapidly even upon photoirradiation using a UV-LED. When the curable composition is to be cured by photoirradiation, a transparent mold is preferably used as the mold.

The conditions for the photoirradiation, when performed as ultraviolet irradiation, are preferably adjusted so that the cumulative irradiance be typically 5000 $mJ/cm^2$ or less (for example, 2500 to 5000 $mJ/cm^2$).

After the photoirradiation, the work is demolded to give an array of Fresnel lenses. The work may be subjected to post-bake treatment (such as heating at 80°C to 180°C for 5 to 30 minutes) as needed before or after demolding.

The heating in the heat treatment is performed at a temperature of typically about 100°C to about 200°C for a time of typically about 0.5 to about 2 hours.

The step 2 is the step of cutting the cured product obtained through the step 1 into single pieces of the optical component, namely, a dicing step. More specifically, the cured product is a cured product having two or more optical-component forms (preferably, having two or more optical-component forms at regular intervals, in which structure, two or more pieces of the optical component are coupled to each other through linking portions. The cutting is preferably performed at the linking portions. The cutting is performed using a cutting means or device such as a dicing blade.

The method according to the present invention for producing an optical component employs the curable composition containing the epoxy compound (A), where the curable composition has a low contraction coefficient or a low expansion coefficient upon curing. The method can therefore product a cured product that has excellent transferability and can accurately produce a cured product having two or more optical-component forms at regular intervals. The deviation of intervals of adjacent two optical components on the cured product is typically 15 $\mu$m or less, preferably 10 $\mu$m or less, and particularly preferably 8 $\mu$m or less. Accordingly, the method enables accurate separation of the cured product into single pieces (separated articles; diced articles) in the dicing step, using a cutting means or device such as dicing blades, and enables efficient volume production of highly accurate/precise optical components.

The step 3 is the step of forming a coating layer or layers on the single pieces of the cured product obtained through the steps 1 and 2 (namely, separated articles). The coating layer may be formed as one layer, or as two or more layers. Namely, the coating layer may have a single-layer structure or a multilayer structure.

The step 3 may further include a surface treatment of the cured product before the formation of the coating layer, so as to provide better adhesion between the cured product and the coating layer. Non-limiting examples of the surface treatment include undercoating, corona treatment, plasma treatment, ozone treatment, and excimer treatment. The step 3 may include each of these treatments alone or in combination.

The coating layer can be formed by applying a coating material onto a separated article (or, surface-treated separated article). Each of different coating materials as mentioned above may be used alone or in combination as the coating material.

Non-limiting examples of the technique for applying the coating material include technique using a dispenser, screen process printing technique, curtain coating technique, and spraying technique. After application, the coating material is dried as needed, subjected to the application of at least one of heat and light to be solidified or cured, and yields a coating layer. By repeating the operation, a coating layer having a multilayer structure including two or more layers can be obtained.

Before the application of the coating material, a portion on which the coating layer is not to be formed is preferably masked by lamination typically of a pressure-sensitive adhesive tape. The pressure-sensitive adhesive tape, for example, used for the masking is preferably removed after the application of the coating material.

In addition, the separation treatment in the step 2 is preferably performed while the cured product obtained through the step 1 is secured to a support (for example, attached to a pressure-sensitive adhesive tape such as a dicing tape). Advantageously, this configuration enables separation without causing misregistration or any other defect, enables collective (simultaneous) formation of coating layers by subjecting the resulting separated articles secured to the support to the next step 3, and enables efficient formation of coating layers on fine separated articles. When the separated articles after the completion of the separation treatment are disposed at narrow intervals, the intervals are preferably widened typically by expanding the pressure-sensitive adhesive tape. This is because, when the separated articles are disposed at appropriately wide intervals, the coating material applied thereto can form a coating layer even on cut sections (sides of the optical component).

Accordingly, the steps 2 and 3 in the method according to the present invention are preferably as follows.

In the step 2, the cured product that is secured to a support is separated to give separated articles secured to the support.

In the step 3, a coating layer is formed on the separated articles secured to the support.

The separated articles, after the formation of the coating layer while the articles are secured to the pressure-sensitive adhesive tape, are picked up from the pressure-sensitive adhesive tape and are subjected typically to board-level mounting.

FIG. 2 illustrates a method according to an embodiment of the present invention for producing an optical component. Steps in FIG. 2 will be described below.

(1) A mask 2 is attached to a cured product 1 having two or more optical-component forms (namely, the cured product 1 is masked).
(2) The cured product 1 is diced along cutting lines 3 to give separated articles 4 each bearing the mask 2.
(3) A coating material is applied to form a coating layer 5.
(4) The mask 2 is removed, to give optical components 6, 7 (namely, separated articles each having a coating layer).

The method according to the present invention for producing an optical component can produce even fine optical components simply and efficiently by cast molding, where the optical components are exemplified typically by Fresnel lenses, in particular, Fresnel lenses for flash systems of cameras). The method can produce different optical components having a wide variety of coating layers in a simple manner, by using different coating materials individually. In addition, the method can easily form a coating layer having a multilayer structure. Accordingly, the method according to the present invention for producing an optical component is advantageous as a method for producing an optical component having a coating layer and can inexpensively provide small quantity, large variety of fine optical components, where the optical components are exemplified typically by flash lenses for use in smartphones and other portable electronic devices.

## Optical Device

The optical device according to the present invention is equipped with the optical component. Non-limiting examples of the optical device according to the present invention include cellular phones, smartphones, tablet personal computers, and other portable electronic devices, as well as infrared sensors, near-infrared sensors, millimeter-wave radars, LED spotlighting devices, near-infrared LED lighting systems, mirror monitors, meter panels, head-mounted display (projection type) combiners, head-up display combiners, and other on-vehicle electronic devices.

The optical component has sufficient heat resistance to be subjected to board-level mounting by a high-temperature heat treatment (such as reflow soldering and other high-temperature treatments performed at a temperature of 260°C or higher). This eliminates the need for mounting the optical component by an extra, separate step, but allows the optical component to be subjected to board-level mounting by a high-temperature heat treatment (such as reflow soldering) collectively with other components, and allows the optical device according to the present invention to be produced efficiently and inexpensively. In addition, the optical component has excellent heat resistance and can be used in on-vehicle electronic devices.

Accordingly, the method according to the present invention for producing an optical device is preferably a method including preparing an optical component by the optical component production method, and subjecting the prepared optical component to board-level mounting by reflow soldering.

## Examples

The present invention will be illustrated in further detail with reference to several examples below. It should be noted, however, that the examples are by no means intended to limit the scope of the present invention.

### Preparation Example 1: Synthesis of (3,4,3',4'-diepoxy)bicyclohexyl (a-1)

A dehydration catalyst was prepared by mixing and stirring 70 g (0.68 mol) of 95 weight percent sulfuric acid and 55 g (0.36 mol) of 1,8-diazabicyclo[5.4.0]undecene-7 (DBU) with each other.

A 3-L flask was charged with 1000 g (5.05 mol) of hydrogenated biphenol (4,4'-dihydroxybicyclohexyl), 125 g (0.68 mol in terms of sulfuric acid) of the above-prepared dehydration catalyst, and 1500 g of pseudocumene, and was heated, where the flask was equipped with a stirrer, a thermometer, and a distillation pipe being packed with a dehydrating agent and thermally insulated. Water production was observed from around the time point when the internal temperature exceeded 115°C. The heating (temperature rise) was further continued up to the boiling point of pseudocumene (to an

internal temperature of 162°C to 170°C), and dehydration reaction was performed under normal atmospheric pressure. The by-produced water was distilled and discharged through the dehydration tube out of the system. The dehydration catalyst was liquid and was finely dispersed in the reaction mixture under the reaction conditions. Approximately the stoichiometric amount (180 g) of water was distilled after a lapse of 3 hours, and this was defined as reaction completion. The reaction mixture after the reaction completion was subjected to distillation using an Oldershaw distilling column including 10 plates to distill off pseudocumene, was further subjected to distillation at an internal temperature of 137°C to 140°C and an internal pressure of 10 Torr (1.33 kPa), and yielded 731 g of bicyclohexyl-3,3'-diene.

Into a reactor, 243 g of the prepared bicyclohexyl-3,3'-diene and 730 g of ethyl acetate were charged. To the mixture, 274 g of a 30 weight percent solution (moisture content: 0.41 weight percent) of peracetic acid in ethyl acetate was added dropwise over about 3 hours while blowing nitrogen into the gas phase and controlling the temperature in the reaction system at 37.5°C.

After the completion of the dropwise addition, the resulting mixture was aged at 40°C for 1 hour, and the reaction was completed. The crude mixture upon the reaction completion was washed with water at 30°C, from which low-boiling compounds were removed at 70°C and 20 mmHg, and yielded 270 g of a reaction product. The reaction product had an oxirane oxygen content of 15.0 weight percent.

The reaction product was also subjected to $^1$H-NMR measurement to find that a peak at a $\delta$ of about 4.5 to about 5 ppm disappeared, where this peak is assigned to an internal double bond; but a peak at a $\delta$ of about 3.1 ppm appeared, where this peak is assigned to an epoxy-derived proton. Thus, the reaction product was identified as (3,4,3',4'-diepoxy)bicyclohexyl.

Preparation Example 2: Synthesis of bis(3,4-epoxycyclohexylmethyl) ether (a-2)

In a 5-L reactor, 499 g (12.48 mol) of (granular) sodium hydroxide and 727 mL of toluene were placed. After nitrogen purging, a solution of 420 g (3.74 mol) of tetrahydrobenzyl alcohol in 484 mL of toluene was added, followed by aging at 70°C for 1.5 hours. Next, the mixture was combined with 419 g (2.20 mol) of tetrahydrobenzyl methanesulfonate, aged under reflux for 3 hours, cooled down to room temperature, combined with 1248 g of water to stop the reaction, and the reaction mixture was separated into an aqueous layer and an organic layer.

The separated organic layer was concentrated, subjected to distillation under reduced pressure, and yielded di-tetrahydrobenzyl ether as a colorless, transparent liquid (in a yield of 85%). The $^1$H-NMR spectrum of the prepared di-tetrahydrobenzyl ether was measured as follows:

$^1$H-NMR ($CDCl_3$): $\delta$ 1.23-1.33 (m, 2H), 1.68-1.94 (m, 6H), 2.02-2.15 (m, 6H), 3.26-3.34 (m, 4H), 5.63-7.70 (m, 4H)

In a reactor, 200 g (0.97 mol) of the above-prepared di-tetrahydrobenzyl ether, 0.39 g of 20% SP-D (acetic acid solution), and 669 mL of ethyl acetate were charged, followed by temperature rise up to 40°C. Next, 608 g of 29.1% peracetic acid were added dropwise over 5 hours, followed by aging for 3 hours. The organic layer was then washed sequentially with an alkaline aqueous solution three times and with ion-exchanged water two times, subjected to distillation under reduced pressure, and yielded bis(3,4-epoxycyclohexylmethyl) ether as a colorless, transparent liquid (in a yield of 77%).

Compounding Examples 1 to 3

Components were blended in formulae (in part by weight) given in Table 1 and yielded curable compositions. The curable compositions obtained according to Compounding Examples 1, 2, and 3 had viscosities respectively of 120 mPa·s, 145 mPa·s, and 583 mPa·s. The viscosities were measured using a rheometer PHYSICA UDS200 (trade name, supplied by Anton Paar GmbH) at a temperature of 25°C and a shear rate of 20 $s^{-1}$.

Each of the prepared curable compositions was poured into a drag (silicone mold) while spacers were placed to a thickness of 1.0 mm. A cope (silicone mold) was placed to close the mold. The curable composition in the mold was cured by the application with a UV-LED (365 nm, supplied by OMRON Corporation) (at 100 mW for 30 seconds) and yielded a cured product having a shape in which a total of 36 rectangular solid concavities (3.6 mm by 3.6 mm by 0.8 mm) were linked to each other through linking portions and were arrayed in a 6 by 6 matrix at a pitch of 4.1 mm (see FIG. 3).

Transfer Accuracy Evaluation

The distance (pitch) of centers of two adjacent concavities in each prepared cured product was measured using a CNC image measurement system NEXIVE VMZ-3020 (trade name, supplied by NIKON CORPORATION), on the basis of which a deviation from the designed value (ideal lattice point) was determined to evaluate transfer accuracy.

Example 1: Cured product having coating layer

To the surface of the cured product prepared in Compounding Example 1 opposite to the surface bearing the concavities, masking tapes of 3.6 mm by 3.6 mm were applied at a pitch of 4.1 mm so that the masking tapes corresponded to the concavities. A dicing tape was applied to the backside (the surface opposite to the surface to which the masking tapes were applied), and the linking portions were cut using a dicing saw DFD6361 (trade name, supplied by DISCO Corporation, having a dicing blade thickness of 0.1 mm) to separate the cured product, and yielded 36 separated cured products (separated articles) (4.0 mm by 4.0 mm by 1.0 mm) secured on the dicing tape.
The separated articles were then subjected to a surface corona treatment and yielded surface-treated separated articles. These articles are hereinafter also referred to as "separated articles before coating".
A white coating material 6080 (trade name, supplied by Labsphere) was used herein.
The coating material was applied to the resulting surface-treated separated articles by spraying using a spray gun so as to have a homogeneous thickness. The coating material was dried and thereby solidified at 120°C for 2 hours, to give separated articles each having a coating layer (single layer) (see FIG. 4).
The wall thickness of each of the separated articles having a coating layer was measured using a micrometer (supplied by Mitutoyo Corporation); and the wall thickness of each separated article before coating was also measured in a similar manner. The thickness of the coating layer was calculated according to the expression:

Coating layer thickness = (Wall thickness of separated article having a coating layer) - (Wall thickness of separated article before coating)

Appearance Evaluation

The appearance of each of the separated articles having a coating layer was visually observed, and was evaluated according to the criteria as follows:

Good: none of abnormalities selected from bubble entrainment, soiling, cracking, defective molding, dripping, and defective coating was observed; and
Poor: one or more of abnormalities selected from bubble entrainment, soiling, cracking, defective molding, dripping, and defective coating were observed.

Optical Properties Evaluation

Light was applied using an LED light source that was disposed just behind a sample separated article having a coating layer, at a distance from the separated article of 1.0 mm. The LED light source emitted light at such an illuminance that the central illuminance of an after-mentioned projection board be about 100 lux in the case where the separated article was not disposed. The illuminance at the central part (at a position just facing the separated article), and an average illuminance of the periphery (at four points 0.77 m in radius from the center), of the projection board was measured using an illuminometer CL-200A (trade name, supplied by Konica Minolta), where the projection board had a size of 1.2 m by 0.92 m and was disposed 1.0 m forward of the separated article.

Light-Shielding Ability Evaluation

A sample separated article having a coating layer was placed so as to cover an LED light source disposed on a ceramic substrate, and this assembled article was placed at an opening of a shade. Whether light leaked to inside of the shade when the LED light source lighted up was visually observed (see FIG. 5), and on the basis of this, the light-shielding ability was evaluated according to criteria as follows:

Good: no light leakage was observed; and
Poor: light leakage was observed.

Heat Resistance Evaluation

Part of a sample separated article having a coating layer was cut out and subjected to thermogravimetry in a

nitrogen atmosphere at a rate of temperature rise of 10°C/min. using a thermal analyzer TG-DTA 6300 (trade name, supplied by Seiko Instruments Inc.) to measure a decomposition temperature (T). The "decomposition temperature (T)" refers to a temperature at which two tangent lines intersect with each other, as illustrated in FIG. 6, where one of the two tangent lines is a tangent line of the curve in a region with no or gradual weight loss (the region "A" in the figure) in early stages of heating, and the other is a tangent line of the inflection point of the curve in a region with abrupt weight loss (the region "B" in the figure).

Example 2

A separated article having a coating layer was prepared and was evaluated for appearance, optical properties, light-shielding ability, and heat resistance, by a procedure similar to that in Example 1, except for using the cured product prepared in Compounding Example 2 instead of the cured product prepared in Compounding Example 1, employing a different coating material and a different thickness of the coating layer as given in the table, and forming the coating layer by the after-mentioned method corresponding to the employed coating material.

Examples 3 to 5

A separated article was prepared and was evaluated for appearance, optical properties, light-shielding ability, and heat resistance, by a procedure similar to that in Example 1, except for employing a different coating material or materials and a different thickness of the coating layer as given in the table, and forming the coating layer by the after-mentioned method corresponding to the employed coating material(s). In Examples 3 and 5, separated articles having a two-layered coating layer were prepared.

Comparative Example 2

A separated article having a coating layer was prepared and was evaluated for appearance, optical properties, light-shielding ability, and heat resistance, by a procedure similar to that in Example 1, except for using the cured product prepared in Compounding Example 3 instead of the cured product prepared in Compounding Example 1, employing a different coating material and a different thickness of the coating layer as given in the table, and forming the coating layer by the after-mentioned method corresponding to the employed coating material.

Comparative Example 1

The cured product before the formation of the coating layer (surface-treated separated article) prepared in Example 1 was evaluated for appearance, optical properties, light-shielding ability, and heat resistance by a procedure similar to that mentioned above.

[Table 1]

TABLE 1

| | | Example 1 | Example 2 | Example 3 | Example 4 | Example 5 | Comp. Ex. 1 | Comp. Ex. 2 |
|---|---|---|---|---|---|---|---|---|
| Curable composition | CELLOXIDE 2021P | 20 | 20 | 20 | 20 | 20 | 20 | |
| | (a-1) | 20 | | 20 | 20 | 20 | 20 | |
| | (a-2) | | 20 | | | | | |
| | OXT101 | 20 | 20 | 20 | 20 | 20 | 20 | 30 |
| | YX8000 | 40 | 40 | 40 | 40 | 40 | 40 | 70 |
| | BYK-333 | 0.5 | 0.5 | 0.5 | 0.5 | 0.5 | 0.5 | 0.5 |
| | CPI-101A | 0.5 | 0.5 | 0.5 | 0.5 | 0.5 | 0.5 | 1.5 |
| Viscosity (mPa·s) | | 120 | 145 | 120 | 120 | 120 | 120 | 583 |
| Transfer accuracy (deviation in μm) | | 4 | 7 | 4 | 4 | 4 | 4 | 18 |
| Coating layer color | | White | Silver | Silver | Black | White | None | Black |
| | | | | White | | Transparent | | |
| Coating layer thickness (μm) | | 18 | 20 | 36 | 10 | 35 | 0 | 8 |
| Appearance | | Good | Good | Good | Good | Good | Good | Good |
| Optical properties (illuminance in lux) | Central part Periphery | 92.3 | 91.0 | 93.1 | 87.8 | 90.5 | 87.4 | 87.9 |
| | | 18.0 | 18.9 | 19.0 | 15.4 | 17.3 | 15.9 | 16.0 |
| Light-shielding ability | | Good | Good | Good | Good | Good | Poor | Good |
| Decomposition temperature (°C) | | 381 | 367 | 376 | 378 | 378 | 376 | 320 |

Coating Layer Forming Method

As a silver coating material, the two components of a coating material HAIUREX P UNP79 (trade name; two-component type) were mixed before use. The applied coating material was dried at 80°C for 10 minutes, further heated at 100°C for 1 hour, and thereby cured.

As a black coating material, GT-7II (trade name, supplied by Canon Chemicals Inc.) was used. The applied coating material was dried at 80°C for 2 hours, further heated at 120°C for 1 hour, and thereby cured.

As a transparent coating material, Z-700K-2 (trade name, supplied by Aica Kogyo Co., Ltd.) was used. The applied coating material was dried at 80°C for 5 minutes, further irradiated with light at 50 mW/$cm^2$ for 30 seconds, and thereby cured.

The abbreviations in Table 1 stand for as follows.

Curable Compounds

CELLOXIDE 2021P: 3,4-epoxycyclohexylmethyl (3,4-epoxy)cyclohexanecarboxylate, having a molecular weight of 252, trade name CELLOXIDE 2021P, supplied by Daicel Corporation

(a-1): the compound prepared in Preparation Example 1, (3,4,3',4'-diepoxy)bicyclohexyl, having a molecular weight of 194

(a-2): the compound prepared in Preparation Example 2, bis(3,4-epoxycyclohexylmethyl) ether, having a molecular weight of 238

OXT101: 3-ethyl-3-hydroxymethyloxetane, having a molecular weight of 116, trade name ARON OXETANE OXT-101, supplied by Toagosei Co., Ltd.

YX8000: hydrogenated bisphenol-A epoxy compound, having a molecular weight of 353, trade name YX8000, supplied by Mitsubishi Chemical Corporation

Surface Modifier

BYK-333: polyether-modified polydimethylsiloxane, trade name BYK-333, supplied by BYG Japan KK

Cationic Initiator

CPI-101A: diphenyl[4-(phenylthio)phenyl]sulfonium hexafluoroantimonate, trade name CPI-101A, supplied by San-Apro Ltd.

Industrial Applicability

The optical component according to the present invention has excellent heat resistance, can be subjected to board-level mounting by reflow soldering collectively with other components, and can give an optical device including the optical component with excellent working efficiency. The optical component has a coating layer and thereby offers excellent light-shielding ability or reflectivity.

The production method according to the present invention can produce the optical component simply and efficiently.

Reference Signs List

1 cured product having a shape in which two or more optical components are linked through linking portions
2 mask
3 cutting line
4 separated article of cured product
5 coating layer
6 separated article having a coating layer (optical component) (plan view)
7 separated article having a coating layer (optical component) (perspective view)
8 cured product prepared in Examples
9 concavity
10 shade

11 light from LED
12 coating layer in separated article
13 layer in separated article, which layer being made of cured product of curable composition
14 LED device
15 ceramic substrate
16 observation perspective

## Claims

1. An optical component comprising:

   a cured product of a curable composition containing (A) an epoxy compound; and
   at least one coating layer disposed on part of the cured product, the coating layer having a thickness of 0.1 mm or less,
   the optical component having a maximum thickness of 2 mm or less and a maximum width in a plan view of 10 mm or less.

2. The optical component according to claim 1,
   wherein the epoxy compound (A) comprises a compound represented by Formula (a):

[Chem. 1]

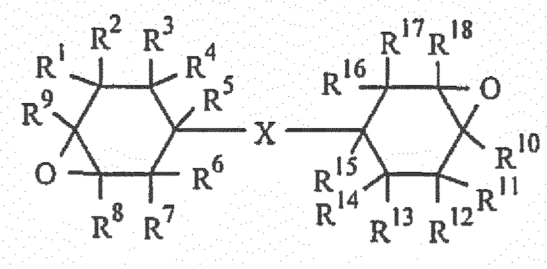

(a)

   wherein $R^1$ to $R^{18}$ are each, identically or differently, selected from hydrogen, halogen, a hydrocarbon group optionally containing oxygen or halogen, and optionally substituted alkoxy; and X is selected from a single bond and a linkage group.

3. The optical component according to one of claims 1 and 2,
   wherein the curable composition comprises:

   (A) the epoxy compound;
   (B) an oxetane compound; and
   (C) a cationic initiator.

4. The optical component according to any one of claims 1 to 3,
   which has a decomposition temperature of 200°C or higher.

5. The optical component according to any one of claims 1 to 4,
   which is a Fresnel lens.

6. A method for producing an optical component to give the optical component according to any one of claims 1 to 5,
   the method comprising the steps of:

   1) charging a curable composition containing an epoxy compound (A) into a mold having two or more optical-component concave patterns and thereafter applying at least one of light and heat to give a cured product having two or more optical-component forms;
   2) separating the cured product into separated articles; and
   3) forming a coating layer or layers on the separated articles.

**7.** The method according to claim 6 for producing an optical component, wherein the light is applied using a UV-LED (wavelength: 350 to 450 nm).

**8.** An optical device comprising the optical component according to any one of claims 1 to 5.

**9.** A method for producing an optical device, the method comprising preparing an optical component by the method according to one of claims 6 and 7 for producing an optical component; and subjecting the prepared optical component to board-level mounting by reflow soldering.

[FIG. 1]

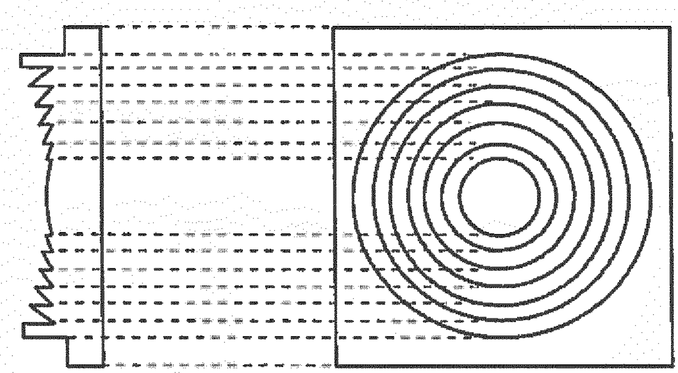

(a-1) (a-2)

[FIG. 2]

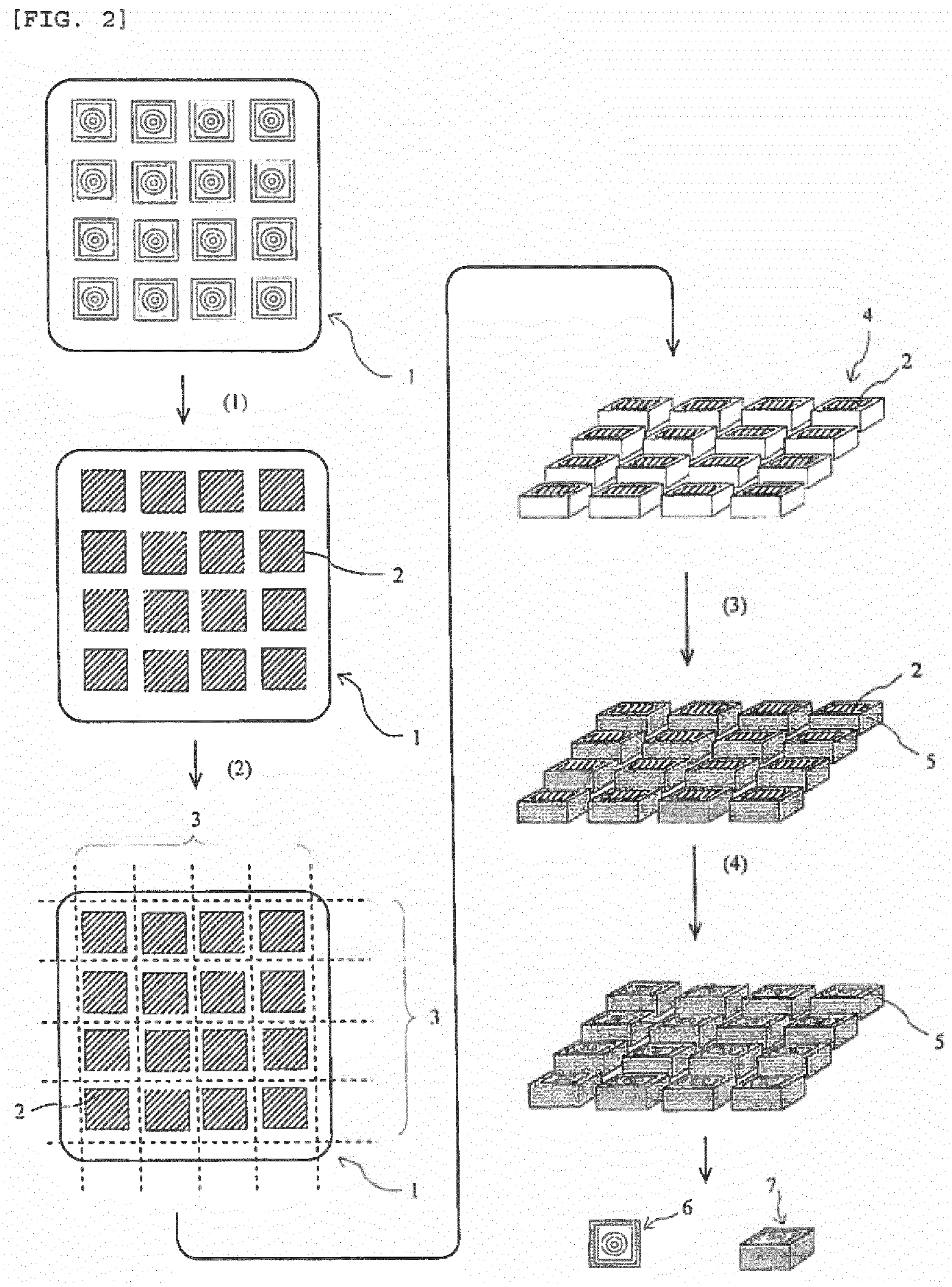

[FIG. 3]

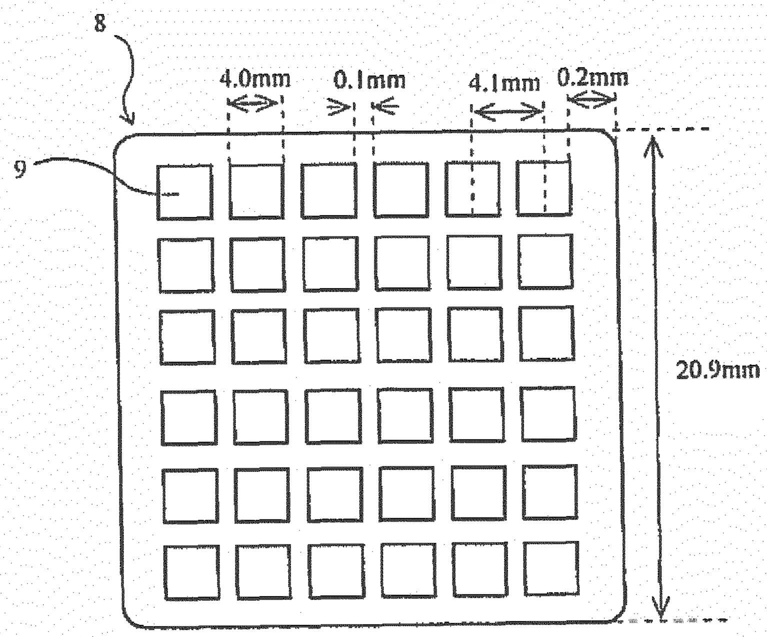


[FIG. 4]

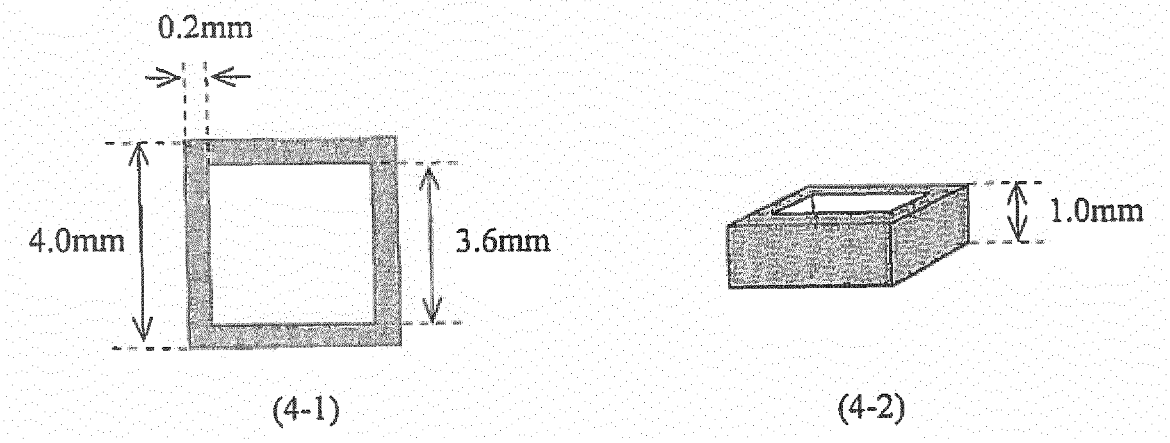


(4-1)

(4-2)

[FIG. 5]

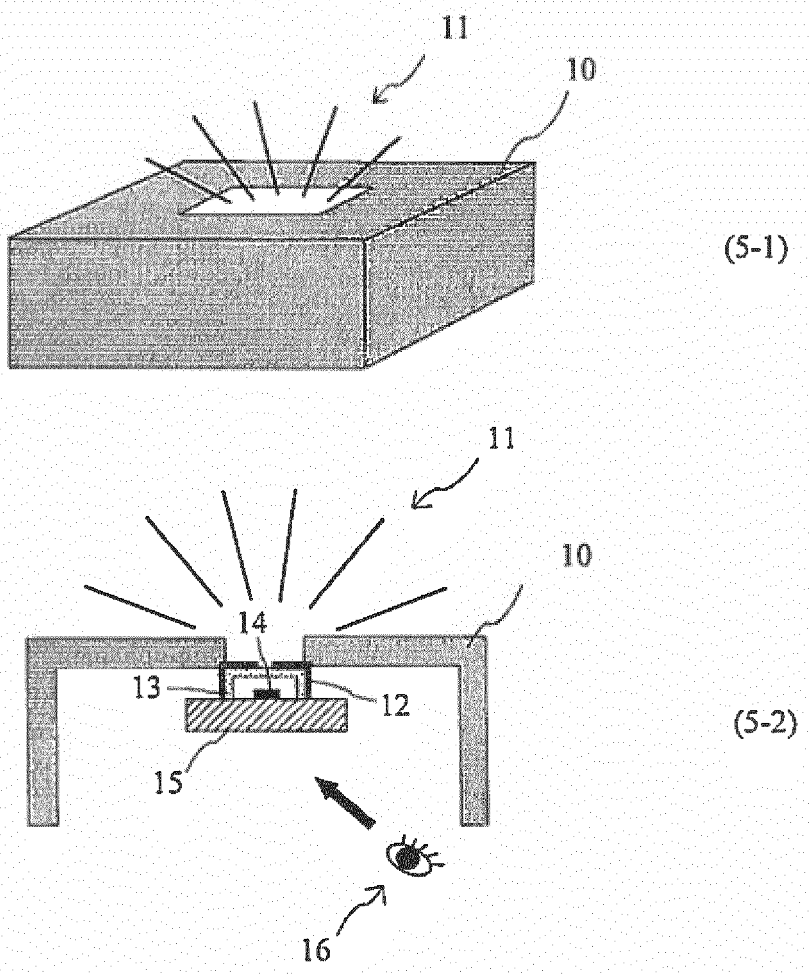

[FIG. 6]

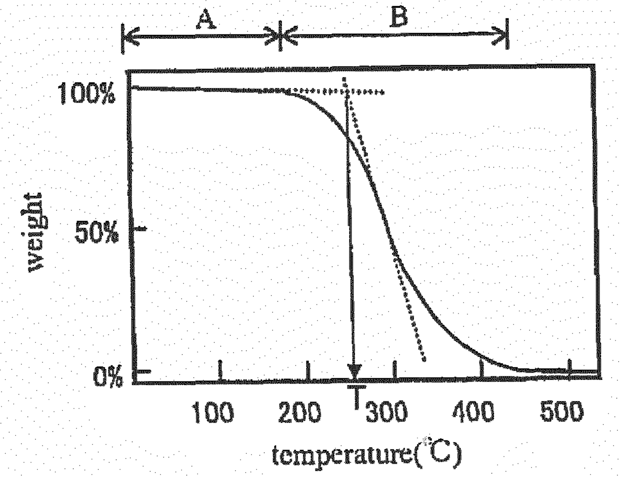

## INTERNATIONAL SEARCH REPORT

International application No. PCT/JP2016/072817

A. CLASSIFICATION OF SUBJECT MATTER
*G02B3/08*(2006.01)i, *B29C39/24*(2006.01)i, *C08G59/24*(2006.01)i, *C08G59/68*(2006.01)i, *C08G65/18*(2006.01)i, *G02B1/04*(2006.01)i, *G02B1/10*(2015.01)i

According to International Patent Classification (IPC) or to both national classification and IPC

B. FIELDS SEARCHED

Minimum documentation searched (classification system followed by classification symbols)
G02B3/08, B29C39/24, C08G59/24, C08G59/68, C08G65/18, G02B1/04, G02B1/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | WO 2015/098736 A1 (Daicel Corp.), 02 July 2015 (02.07.2015), paragraphs [0030], [0123] to [0132], [0136], [0144] to [0146] & TW 201533143 A | 1-9 |
| Y | JP 2004-170862 A (Dainippon Printing Co., Ltd.), 17 June 2004 (17.06.2004), paragraphs [0043], [0083] to [0084] & US 2005/0111099 A1 paragraphs [0062], [0117] to [0118] & WO 2004/049020 A1 & CN 1685250 A | 1-9 |

☒ Further documents are listed in the continuation of Box C. ☐ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| | |
|---|---|
| Date of the actual completion of the international search<br>15 September 2016 (15.09.16) | Date of mailing of the international search report<br>04 October 2016 (04.10.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.
PCT/JP2016/072817

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-208726 A (Dainippon Printing Co., Ltd.), 10 August 2006 (10.08.2006), paragraphs [0115] to [0116] (Family: none) | 1-9 |
| A | JP 2012-504253 A (ITI Scotland Ltd.), 16 February 2012 (16.02.2012), paragraphs [0022] to [0025] & US 2011/0182084 A1 paragraphs [0025] to [0028] & GB 2463913 A & WO 2010/035050 A1 & TW 201018973 A | 1-9 |
| A | JP 2011-74280 A (Fujifilm Corp.), 14 April 2011 (14.04.2011), paragraphs [0001], [0078], [0096] (Family: none) | 1-9 |
| A | JP 11-246647 A (Toagosei Co., Ltd.), 14 September 1999 (14.09.1999), paragraphs [0074] to [0081] (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015162635 A
- JP 2013212593 A
- JP 2013224349 A